(19)

Europäisches
Patentamt

European
Patent Office

Office européen
des brevets

(11) **EP 4 075 752 A1**

(12) **EUROPEAN PATENT APPLICATION**

(43) Date of publication:
**19.10.2022 Bulletin 2022/42**

(21) Application number: **21207868.7**

(22) Date of filing: **11.11.2021**

(51) International Patent Classification (IPC):
**H04L 41/0823** *(2022.01)*   **H04L 41/0896** *(2022.01)*
**H04L 41/14** *(2022.01)*   **H04L 41/147** *(2022.01)*
**H04L 41/16** *(2022.01)*

(52) Cooperative Patent Classification (CPC):
**H04L 41/0823; H04L 41/0896; H04L 41/145;**
**H04L 41/147; H04L 41/16;** H04L 41/5009;
H04L 41/5067

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **12.04.2021 IN 202141017064**

(71) Applicant: **Subex Assurance LLP**
**560103 Bangalore, Karnataka (IN)**

(72) Inventors:
• **Sharma, Ram Kumar**
  **560035 Bangalore (IN)**
• **Sinha, Alok Kumar**
  **560066 Bangalore (IN)**

(74) Representative: **Tomkins & Co**
**5 Dartmouth Road**
**Dublin 6 (IE)**

(54) **INTELLIGENT CAPACITY PLANNING AND OPTIMIZATION**

(57) The principal object of the embodiments herein is to disclose predictive capacity analysis and pro-active performance bottleneck identification using multivariate machine learning techniques for efficient network capacity expansion and optimization to enhance customer experience by improving quality of service (QoS) while ensuring better return of investment (ROI).

FIG. 1

**Description**

**CROSS REFERENCE TO RELATED APPLICATIONS**

This application is based on and derives the benefit of Indian Provisional Application 202141017064 filed on 12th April 2021, the contents of which are incorporated herein by reference.

**TECHNICAL FIELD**

Embodiments disclosed herein relate to network capacity planning, and more particularly to intelligent capacity planning and optimization.

**BACKGROUND**

Network capacity planning is a process of planning a network for utilization, bandwidth, operations, availability and other network capacity constraints. Network capacity planning is performed to identify shortcomings or parameters that can affect the network's performance or availability within a predictable future time, usually in years. Network capacity planning involves network administrators planning for network infrastructure and operations, in line with current and future operations.

Currently, the focus of network operators is shifting more towards customer experience and how Quality of experience (QoE) can be enhanced. At the same time, mobile networks face new challenges to respond due to ever increasing traffic demand which cannot be attributed homogenously, due to reasons such as ununiform user behavior, variable spatial and temporal trend in peak data demand centroid. Existence of multi-RAT, multivendor, multilayer scenarios result in an overwhelming number of parameters, which need to be configured to optimize the network performance.

As data demand is becoming multi fold day by day, mobile networks are facing high capacity strain. Lack of accuracy can lead inefficiencies in capital investment, which can not only impact Return on Investment (ROI), but also the customer experience.

Traditionally, network capacity planners have exposure to technical performance metrices only and based on linear growth of the technical performance metrices, planning decisions are carried out, which may not be optimal. The ROI cannot be assured as linear growth may not be termed accurate considering varying network usage trends and user behaviors. Further, usage of different data sources such as probe, traces, customer experience, business potentials remains limited traditionally. Another limiting factor is the scarcity of flexible and scientific methods, which can consider multiple and diverse factors.

Network capacity directly depends on available resources, such as Physical Resource Blocks (PRBs), Physical Downlink Control Channel (PDCCH) element usage, number of connected users, etc. in Long Term Evolution (LTE); while 3G may consider air speech equivalent (ASE) load, noise and interference, power utilization, code usage, etc. Network performance remains stable until a certain extent of usage of these resources. Once the threshold crosses a pre-determined limit, network performance may start deteriorating. In such scenarios, user experience may also get degraded and QoS and QoE becomes poor. Proactive identification and mitigation of occurrence in terms of offloading or capacity expansion is required in network elements, where resources can get scarcer and capacity headroom reduction can result in a capacity constrained hotspot. A plain forecasting on traffic demand or capacity resource alone may not be flawless for capacity planning as network radio health has not been considered. In some scenarios, it may happen that though network resource usage is high even with very low number of connected users and payload for example if Radio health is not good or cell edge users are in high numbers. Though capacity is limited in such cases, but these issues can be fixed by optimization than going for capacity expansion which again put strain on network providers revenue. Hence a multi-dimensional and holistic assessment of network is required for capacity headroom which can consider various type of network evaluation metrices.

Additionally, the latent components (for example, upcoming planned neighbor cell or sites, latent traffic demand, and so on) remain unused in traditional planning, which may impact the network performance drastically.

Managing different data sources accurately itself throws a unique challenge as the amount of network measurements and diagnosis data is large, varying data types and formats from different sources, missing values in the data.

Hence cost effective and smart planning becomes need of hour for network operators, which not only enhance network quality of service and experience, but can put investment in check to minimize the cost on capital and operation expenses.

**OBJECTS**

The principal object of embodiments herein is to disclose methods and systems for performing predictive capacity analysis and pro-actively identifying performance bottlenecks in a mobile communication network, wherein the network comprises a plurality of network elements.

Another object of the embodiments herein is to disclose methods and systems for performing predictive capacity analysis and pro-actively identifying performance bottlenecks using multivariate machine learning techniques for efficient network capacity expansion and optimization, thereby enhancing customer experience by improving quality of service (QoS), while ensuring better return of investment (ROI).

Another object of embodiments herein is to disclose methods and systems for making smart spectrum decision(s) in terms of Radio Access Technology (RAT) upgrade or spectrum re-farming and capital expenditure reduction.

These and other aspects of the embodiments herein will be better appreciated and understood when considered in conjunction with the following description and the accompanying drawings. It should be understood, however, that the following descriptions, while indicating at least one embodiment and numerous specific details thereof, are given by way of illustration and not of limitation. Many changes and modifications may be made within the scope of the embodiments herein without departing from the spirit thereof, and the embodiments herein include all such modifications.

## BRIEF DESCRIPTION OF FIGURES

Embodiments herein are illustrated in the accompanying drawings, throughout which like reference letters indicate corresponding parts in the various figures. The embodiments herein will be better understood from the following description with reference to the drawings, in which:

FIG. 1 illustrates a system for assessing a plurality of network elements involved in network capacity planning, according to embodiments as disclosed herein;
FIG. 2 illustrates the steps involved in forecasting, according to embodiments as disclosed herein;
FIG. 3 illustrates conceptual flow diagram to depict the steps involved in assessing a plurality of network elements in a network and assessing whether capacity gain is met, according to embodiments as disclosed herein;
FIG. 4 illustrates clustering process flow, according to embodiments as disclosed herein;
FIG. 5 illustrates a visualization of the clustering output on map, according to embodiments as disclosed herein; and
FIG. 6 illustrates the method involved in the generation of effective KQIs, according to embodiments herein.

## DETAILED DESCRIPTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

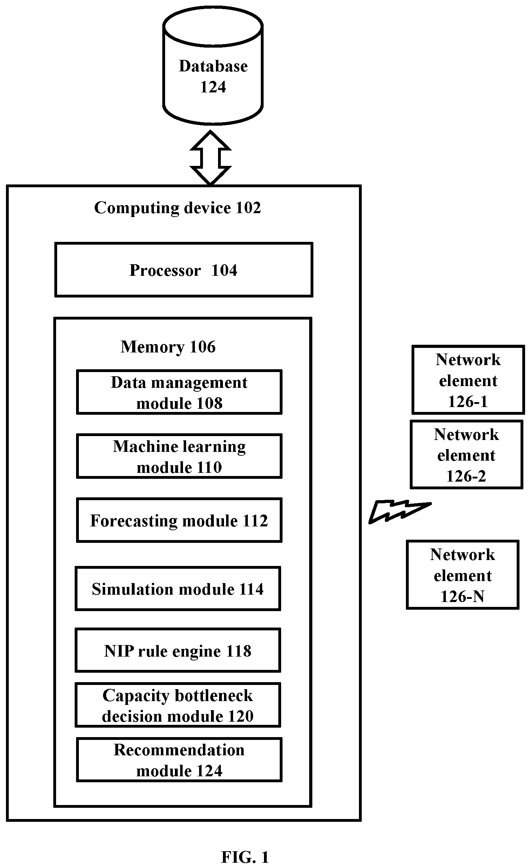

The embodiments herein achieve methods and system for performing predictive capacity analysis and pro-actively identifying performance bottlenecks using multivariate machine learning techniques. Referring now to the drawings, and more particularly to FIGS. 1 through 6, where similar reference characters denote corresponding features consistently throughout the figures, there are shown embodiments.

FIG. 1 illustrates a system 100 for assessing a plurality of network elements involved in network capacity planning, according to the embodiments herein. The system 100 for the network capacity planning comprises a computing device 102, wherein the computing device 102 comprises a processor 104 and a memory 106. The memory 106 can be coupled to the processor 104. The memory 106 comprises a plurality of modules, such as a data management module 108, a machine learning (ML) module 110, a forecasting module 112, a simulation module 114, a Network Investment Plan (NIP) rule engine 118, a capacity bottleneck decision module 120, and a recommendation module 122. The computing device 102 can be coupled to a database 124. The computing device 102 can be communicatively coupled to a plurality of network elements 126-1, 126-2, ..., 126-N.

The database 124 can comprise of multi-dimensional data. The multi-dimensional data can be related to network performance management, configuration management, drive test, call and user traces, probes, business metrices (such as Average Revenue Per User (ARPU) and the like), customer experience metrices (for example, stalls, buffer time, and the like), customer complaints, and so on. The multi-dimensional data sources enable correlation of Quality of Service (QoS) to Quality of Experience (QoE).

The data management module 108 can access the data from the database 124. The data management module 108 performs a rigorous consistency check on the data. The consistency check can include, for example, checking if the data reasonable, internally consistent, complete, and error free. The consistency check can help in determining the type of the data source, time stamp matching, hierarchical or structural properties, and the like. The data management module 108 incorporates a microservice based architecture and Machine Learning (ML) components to handle abnormalities (such as missing values, null values, outliers, and the like). The data management module 108 can perform actions such as, but not limited to, bulk data processing, profiling and modelling, and schema selection. The data management module 108 can segregate the data sources, based on overlapping time stamps. The data management module 108 forms a master data source, which takes care of disparate data sources and draws a meaningful correlation among each other. The data management module 108 creates data models which help in incorporating multi-source data feeds which may not be directly correlated to each other. Modelling of the data is performed in such a way that a hierarchical relationship tree is formed among the data feeds so that sparse data sources are correlated to each other. During data mapping phase, different data sources are mapped to have an exhaustive data set called the master data source, comprising all the data sources with detailed hierarchy. Therefore, all independent data sources form the data set called the master data source, thereby complementing each other.

The database 124 can contain structured data and/or unstructured data. Examples of the structured data can be, but not limited to, performance management data, configuration management, events, alarms, and so on. Examples of the unstructured data can be, but not limited to, customer complaints, billing records, trouble tickets, and the like.

Capacity planning can leverage the structured data and the unstructured data to cover multi aspect of planning, which can ensure better customer experience, while ensuring quicker and better ROI. To handle elaborate structures from multiple domains, the data management module 108 can use multi-source network data ML methodologies with domain rules, which sits well on efficiently processed and managed data. The data management module 108 can distribute the load using at least one of microservice architecture and/or a cluster computing framework.

According to the embodiments herein, the ML module 110 can use a multi-dimensional representation of various KPI counters along with Geo data, revenue data and configuration data.

Embodiments herein propose to use both microservice architecture and cluster computing framework at different stages. In an example herein, Hadoop file systems can be used for big data storage, Hive can be used as a warehouse, Kafka can be used as a distributed message queue, Spark SQL can be used as a distributed in-memory cluster computing engine, Spark Streaming can be used as a stream processor and microservice architecture.

To handle missing or abnormal values in the modelled and processed data, the ML module 110 can use various ML methodologies to handle such anomalies such as mean, mode or median imputation for smaller data sets. The ML module 110 can use regression imputation for handling large amounts of missing data.

$$Y = a_0 + a_1X_1 + a_2X_2 + a_3X_3 + a_4X_4 + \ldots\ldots + a_nX_n \text{ ------------ } (1)$$

According to embodiments herein, the ML module 110 can use equation (1) to extrapolate the existing trends and impute missing values for KPI with large percentages of missing data (Y). Here $a_0$ is the intercept and $a_1, a_2, a_3, a_4 \ldots\ldots a_n$ are the estimated regression coefficients representing the contribution of the KPIs $X_1$, $X_2$, $X_3$, $X_4$, .... $X_n$ respectively.

The ML module 110 can comprise ML components, wherein the ML components can treat outliers. The outliers can occur due to outage or special events. This can enable avoidance of false triggers. The ML module 110 can handle the outliers statistically by normalizing the data and applying the z-score given by,

$$Z = X - mu/sigma$$

Where Z is z-score, mu is mean, sigma is standard deviation from the mean and X is data value. The empirical rules are applied to set the threshold for z-score.

The ML module 110 becomes operational, once the master data source has been formed by the data management module 108. The ML module 110 categorizes network performance metrices or the KPIs into a plurality of categories; such as, but not limited to, capacity metrices, quality metrices, customer experience metrices, service experience metrices, and business metrices.

Examples of the capacity metrices may include, but not limited to, average number of RRC connected users, Physical Resource Block (PRB) utilization, Physical Downlink Control Channel (PDCCH) utilization, downlink payload, and the like.

Examples of the quality metrices include, but not limited to, RSRP/RSRQ/SINR, CQI, PDCCH aggregation, MCS distribution, absolute CQI, Timing advance, and the like.

Examples of the service experience metrices include, but not limited to, downlink/uplink user throughput, accessibility, retainability, spectral efficiency, and the like.

Examples of the business metrices include, but are not limited to, Economic importance (Revenue), ARPU, churn, Social importance (VIP subscribers, Covered area type, and the like.

Examples of the customer experience metrics include service specific Quality of Experience (QoE).

The ML module 110 performs a correlation study of the network performance metrics to identify dependent variables and/or dependent KPIs for capacity assessment and Key Performance Indicators (KPIs) relevant for the QoE. For the correlation study, the ML module 110 calculates correlation scores for input KPI's with output KPI's and determines which of the input KPIs are highly correlated. Higher the score higher the correlation. The ML module 110 removed the input KPIs which are highly correlated as it leads to multicollinearity. For the KPIs that are not linearly related but having weight, while determining target capacity and QoE indicators, the ML module 110 determines feature importance and applies the determined feature importance for the KPIs. Feature importance helps in using viable features for the model to learn better and to eliminate unwanted redundant and less variance features. Feature importance can be calculated in multiple ways, for example, but not limited to, model coefficients, tree-based feature importance, and the like. The model coefficients are those coefficients that provide information on how sensitive an output variable is towards the features through coefficient values. The tree based feature importance provides feature importance standardized scores by determining the number of times features are used while splitting the trees. Using the above scores, best features can be chosen based on higher scores. The ML module 110 prepares an optimal feature set comprising a set of correlated KPIs and KPIs identified from the determined feature importance. The ML module 110 passes the optimal features set to the forecasting module 112. The forecasting module 112 applies domain-based ML techniques on the optimal feature set.

The forecasting module 112 performs various simulations based on training set and determines how variation(s) in the dependent KPIs can impact the capacity resources. For instance, the forecasting module 112 determines how growth of traffic demand by x% would impact throughput and PRB utilization. The forecasting module 112 considers latent components, such as latent traffic demand and planned site impact on forecasting and generates a simulation matrix. The simulation matrix provides information about how capacity situation changes if a KPI increases by 'x' amount, or when new sites are planned, how capacity and demand scenario varies.

Embodiments herein use Analytical Hierarchical Process (AHP) weighted method and dynamic normalization to group multiple KPIs which may vary in scale and range, so that effective KQIs can be generated. Examples of the multiple KPIs can be, but not limited to, capacity metrics, quality metrics, customer experience metrics, service experience metrics, and business metrics.

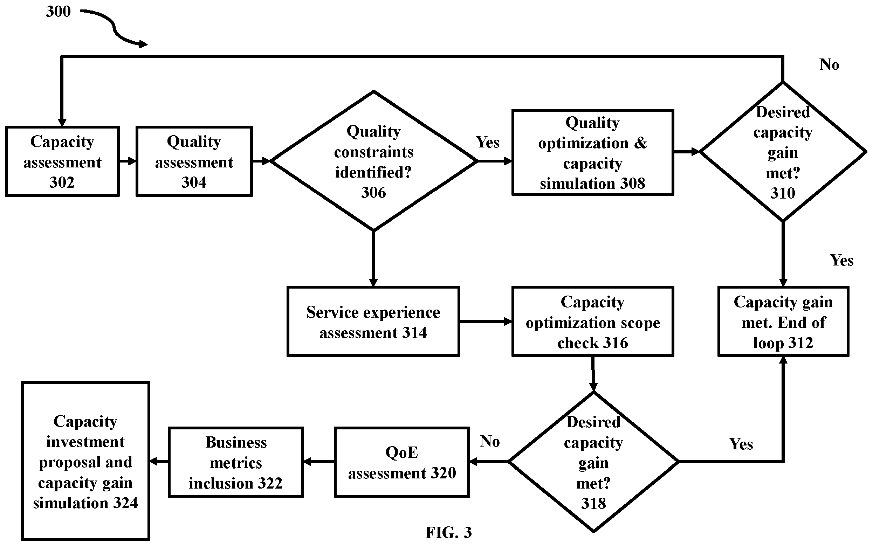

Embodiments herein integrate a domain rule model to determine the capacity headroom, i.e., capacity bottleneck decision and saturation status. FIG. 3 illustrates determination of capacity headroom in more detail.

The NIP rule engine 118 implements a domain rule model and uses a bucketing methodology to break down each Key Quality Indicator (KQI). Each KPI is assigned a unique class, such as capacity saturated, about to saturate, and abundant buffered capacity. The various class combinations of KPIs under each KQI form a decision class. The NIP rule engine 118 can map the decision class to a domain rule table, which can be further reinforced with ML feedback. The NIP rule engine 118 determines whether capacity bottleneck has been breached, or if the capacity bottleneck is in an alarming phase, based on a rule table. Rule table can be configured by users or it can be learned by ML models based on users class assignment to each unique combination of different KPIs. This can help in taking proactive actions as decisions are based on existing as well as forecasted data.

Using the simulation matrix, the NIP rule engine 118 can execute different scenarios, so that the communication service providers (CSPs) can have further deep insights based on their requirement, which may be based on marketing campaign(s), handling of specific event(s), or any similar case.

The capacity bottleneck decision module 120 can highlight the network elements based on the information from the NIP rule engine 118, which are saturated in terms of capacity. This enables the CSPs to make a decision on when to invest. The resultant KQIs can be used to prioritize where to invest first.

The embodiments herein disclose a clustering method to identify the hotspots which cause huge demand and/or result in a poor user experience. Based on the type of hotspot, the type of investment can be determined. If there are few hotspots, then a small cell can serve and if hotspots are spread across the whole serving area, then carrier addition can result in better outcome. The NIP rule engine 118 can provide recommendations as to what type of investment can be required.

The capacity bottleneck decision module 120 analyses the capacity saturated network elements to provide ways to reduce capital expenditure investment. The capacity bottleneck decision module 120 comprises a quality and capacity optimization block. The quality and capacity optimization block can perform multiple checks, such as aggregated capacity, in case of multi RAT or multi carrier, so that traffic offloading can be done, or feature enablement or license augmentation, device type analytics, spectrum re-farming, RF shaping and the like, can be done which can essentially help in capital expenditure reduction. The capacity bottleneck decision module 120 can identify the under-utilized sites/infrastructure, which can be downgraded in terms of capacity. Gain can be transferred to highly loaded base stations based on an output from the recommendation module 124. For example, downgrade and gain transfer may be feature licenses that are subjected for purchase. If a feature is not required due to less demand in a network element, then the feature can be disabled and can be transferred to another network element.

The capacity bottleneck decision module 120 performs bucketization by categorizing each of a plurality of KPIs into a plurality of buckets. The capacity bottleneck decision module 120 assesses a capacity for the plurality of network elements 126-1, 126-2, ..., 129-N at different granularity of one of a cell, a sector, and a site, for identifying capacity saturated network elements and assesses quality for the identified capacity saturated network elements and identifies one or more quality constraints based on the assessed quality. The capacity bottleneck decision module 120 optimizes the quality and simulates the capacity to check if a desired capacity gain has been met. The capacity bottleneck decision module 120 assesses service experience for the identified capacity saturated network elements, if the one or more quality constraints have not been identified and if the capacity gain has been met. The capacity bottleneck decision module 120 assesses quality of Experience (QoE) in the identified capacity saturated network elements coverage area for identifying one or more hotspots. The capacity bottleneck decision module 120 assesses at least one business metric for the identified one or more hotspots and the plurality of network elements. The capacity bottleneck decision module 120 prioritizes the plurality of network elements and locations based on indexing, for generation of KQIs and for generating a single score to rank bottleneck issues. The capacity bottleneck decision module 120 recommends capacity investment planning and simulating capacity gain based on the assessed at least one business metric and based on the single score.

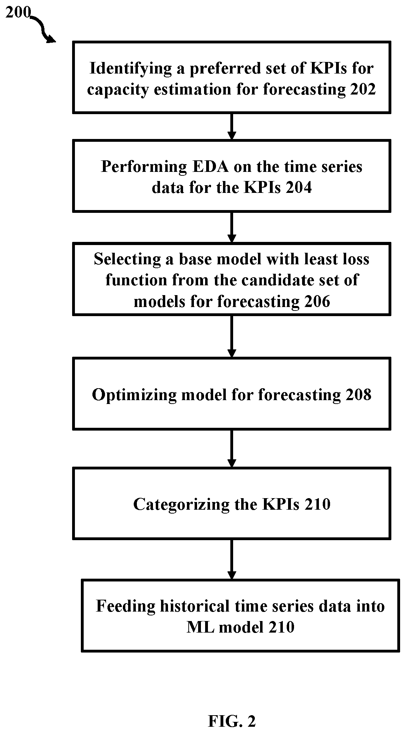

FIG. 2 illustrates the steps involved in forecasting, according to the embodiments herein. Embodiments herein disclose a methodology to build a reliable forecasting system, which can assess forecasted trends for different network performance metrices more effectively, when compared with existing models.

As shown in FIG. 2, in step 202, the forecasting module 112 identifies a preferred set of KPIs for capacity estimation for forecasting. For example, the preferred set of the KPIs can be user-configurable. Examples of the preferred set of KPIs includes, but is not limited to, PRB utilization, total traffic, average number of RRC connected users, PDCCH utilization, performance check values (such as Channel Quality Indicator (CQI), Modulation and Coding Scheme (MCS), PDCCH aggregation, accessibility, and so on), and so on. In step 204, the forecasting model performs exploratory data analysis (EDA) on the time series data for these KPIs. For instance, the EDA can be performed using well-known graphical techniques, such as box plot, scatter plot, histogram, and the like, dimensional reduction techniques, and quantitative techniques. After performing EDA and data preprocessing, the forecasting model identifies a candidate set of models for forecasting. For instance, the candidate set of models can be from causal, or non-causal quantitative models. In step 206, the forecasting module 112 selects a base model with a least loss function from the candidate set of models for forecasting. In step 208, the forecasting module 112 tunes the model estimator to account for recency factor and methods like feature engineering and auto-hyperparameter tuning are adopted to optimize the model for forecasting. The recency factor refers to data that is closer to the current situation and therefore, the recent data points has to be given more weightage. In order to take the recency into account, the forecasting module 112 performs the tuning of the base model estimator. Mathematically, while building the model, the tuned base model estimator multiplies a gradient, i.e., a first order partial derivative of the loss function, and a Hessian function, i.e., a second order partial derivative of the loss function, by the sample, or instance weights. This forces the estimator to give more attention to recency in the time series data while learning from historical data. Feature engineering is done so that different time granularity can be accommodated via forecasting model to capture trends and seasonality. Hyperparameters are parameters of ML model specified by "hand" to the algorithm based on expertise & domain experience whose values are used to control the learning process. Hyperparameter tuning on the selected base model is done to further improve the accuracy of selected model. Some commonly used loss functions for regression models are mean square error (MSE), root mean square error (RMSE), mean absolute error (MAE), and mean absolute percent error. The embodiments herein have been explained using RMSE as an example of a main loss function and comparative analysis has been performed using RMSE as an example of the regression model.

Once an appropriate forecasting model is selected, in step 210, the forecasting module 112 models the KPIs and categorizes the KPIs into capacity/quality/service experience/customer experience/business drivers which subsequentially become inputs from the domain ML model to the NIP rule engine.

Embodiments herein use an inhouse model which incorporates network centric attributes, for example, band, clutter, demography, multi variate dependency and so on.

In step 212, the forecasting module 112 feeds historical time series data (for a pre-defined time period; for example, data for more than the previous 6 months, data for more than the previous 12 months, and so on) for various KPIs into the ML model. Based on the time period of the data being used, the forecasting module 112 performs forecasting till the end of a pre-defined planning period. The planning period can be defined by an network operator.

The various actions in method 200 may be performed in the order presented, in a different order or simultaneously. Further, in some embodiments, some actions listed in FIG. 2 may be omitted.

FIG. 3 illustrates a conceptual flow diagram to depict the steps involved in assessing the plurality of network elements in the network and assessing whether capacity gain has been met, according to the embodiments herein. According to the embodiments herein, domain specific technical KPIs are used to develop holistic capacity assessment. The domain specific technical KPIs include, but are not limited to, resource utilization (Physical resource block utilization, PDCCH utilization, Power utilization, ASE, Channel Element, Code Utilization and so on0, Connected users (Average number of RRC connected users, no of voice and HS users, and so on), Traffic DL, and the like. For Quality evaluation, Channel quality indicator (CQI), Modulation and Channel coding scheme distribution, PDCCH aggregation level distribution, Congestion failures (RRC/RAB), Timing Advance, and so on. Quality evaluation coupled with capacity headroom outcome can reflect the true capacity scenario; whether a network element has a real capacity issue or optimization can fix the bottlenecks by enhancing the network health, thus avoiding unnecessary congestion. Embodiments herein are not limited to the proposed KPIs only, but can be expanded as per network specific requirements. Service related KPIs (such as DL throughput, accessibility, retainability and the like) should also be considered to have impact analysis of capacity saturation on service experience.

All investment does not yield the same ROI; hence it is always better to prioritize the capital expenditure. Business drivers such as cumulative Revenue (derived from data, voice, VAS, SMS, interconnect charges can be used individually if capacity need to be investigated for voice or data separately), Churn, ARPU, High value subscriber details, social importance along with customer experience information such as perceived user throughput, perceived RSRP/SINR, stalls, buffering time and count, delay jitter can be used to prioritize the capacity saturated network elements by evaluating served QOE and financial influence factors.

In step 302, capacity assessment for the network elements at different granularity of cell, sector, or site, is performed by the capacity bottleneck decision module 120. Based on the capacity assessment, capacity saturated network elements are identified by the system. For the capacity assessment, the forecasting module 112 provides a mix of historical trend, current trends, and expected future scenarios for each capacity and service-related network KPIs. The granularity can be daily, busy hour, and the like. Based on the historical and forecasted data, the capacity bottleneck decision module 120 performs bucketization by categorizing each of the KPIs into a plurality of buckets, for example, threshold aligned, threshold non-aligned higher zone, threshold nonaligned-lower zone, and so on. Based on this data, historical and forecasted, each KPI can be categorized into a plurality of buckets for example, Threshold aligned, Threshold nonaligned-higher zone, Threshold nonaligned-lower zone etc. These buckets can be characterized based on the nature of the KPIs. For example, under throughput category, Threshold aligned can be attributed, when throughput is higher than a pre-defined threshold; while Retainability can be attributed, when the drop rate is lower than pre-defined thresholds. In an embodiment herein, the pre-defined thresholds can be based upon 3GPP specified industry standards. In an embodiment herein, the pre-defined thresholds can be derived using statistical modeling of the distribution of the KPIs. Considering the example of using PRBs, when PRB Utilization crosses 70% usage limit, the user experience degrades as available resource blocks become scarcer and scheduling of transmission blocks becomes difficult. Hence, if any network element for any specific granularity has PRB Utilization >70%, it can be marked as highly utilized, thus the bucket, Threshold nonaligned-higher and performance may get impacted. The bucketization is therefore performed by assigning an absolute category for a combination of each of the plurality of KPIs and each of the plurality of network elements, based on the highest bucket, historical data, and forecasted data. The capacity bottleneck decision module 120 assesses the capacity for the network elements 126-1, 126-2, ..., 129-N at different granularity of one of a cell, a sector, and a site, for identifying capacity saturated network elements.

KPIs relevant to capacity, service and quality can be distributed into one or more buckets. Each Network element can be assigned a category for the KPIs (such as Physical resource block utilization (PRB), Average number of RRC connected users, Traffic DL, PDCCH Utilization, DL Cell Throughput (KPIs can be expanded as per requirements)) on any given granularity (which could be daily, busy hour, and the like). Based on the highest bucket or category occurrence, an absolute category can be assigned with respect to historical and forecasting data for each metric and network element combination. The capacity bottleneck decision module 120 assigns an absolute score with respect to historical and forecasted data for each KPI and network element combination, based on the highest bucket of category occurrence. The capacity bottleneck decision module 120 derives a final category assignment by comparing results of bucket category output of the historical and forecasted data.

Embodiments herein base the final absolute category decision on the bucket matrix of forecasting and historical data. For example, a network element, as per historical data, may fall under Threshold aligned category for PRB utilization; but considering traffic demand as Threshold nonaligned-higher in near future and based on the forecasting data, the network element can be marked as Threshold nonaligned-higher for PRB utilization as final category. So, each network element and relevant KPI is marked with an absolute category.

Considering each metric is divided into Threshold aligned/Threshold nonaligned higher/Threshold nonaligned lower, there can be 243 combinations available as per the above KPI set. In an example, a combination could be PRB (Threshold nonaligned-higher)/ Traffic (Threshold nonaligned-higher)/Connected users (Threshold nonaligned-higher)/Throughput (Threshold nonaligned-lower)/PDCCH utilization (Threshold nonaligned-higher), which indicates that the particular network element is highly loaded and needs to be investigated for capacity expansion. All such bucketized combinations can be marked for quality optimization, underutilized and expansion point of view based on the domain expertise and using feedback in ML feedback loop. Service experience and quality, i.e., KPIs/KQIs are correlated based on the decision achieved from the capacity of the KPIs. Correlation is performed as per correlation scores for input KPIs with output KPIs, to determine which of the input KPIs are highly correlated.

In step 304, the capacity bottleneck decision module 120 performs a quality assessment for the identified capacity saturated network elements and identifies quality constraints based on the assessed quality. Quality KPIs can be referenced from the most recent data, wherein the recent data can be network data from a pre-defined recent time period. Quality metrics such as CQI/MCS/PDCCH aggregation/congestion/TA analysis etc. can provide a snapshot of network performance with respect to the QoS. These metrics can be bucketized/categorized, as discussed previously, in different buckets based on thresholds. For example, High TA (Timing advance) samples beyond second tier neighbors may indicate overshooting network element(s) and can be marked as Threshold nonaligned-lower in quality. Similar to absolute category decision for capacity KPIs, each quality KPI can also be assigned an absolute category based on maximum occurrence and each unique combination of quality KPIs can indicate whether the network element falls under low quality and optimization may help in resolving the capacity constraint of the respective network element. For example, in one scenario, high CQI samples in range CQI 0-6 is category Threshold nonaligned-lower, high samples under PDCCH aggregation-8 also display the category as Threshold nonaligned-lower, overshooting result can also mark the category as Threshold nonaligned-lower. Hence, the combination is formed of Threshold nonaligned-lower/Threshold nonaligned-lower/Threshold nonaligned-lower, which clearly marks the network element as a network element having a quality of Poor. Criteria and matrix similar to the capacity assessment can be expanded on any number of quality metrics. Thresholds for determining individual categories, such as CQI, MCS, PDCCH, and the like, can be based on the 3GPP standard or based on statistical modelling and can vary as per requirements.

If the assessment of the capacity KPIs yield an absolute decision for capacity expansion, the resultant network elements are evaluated for absolute quality category. Based on quality assessment ,if headroom is found for optimization by marking network element under poor quality, then a first optimization is suggested based on the quality of the triggering KPI. Resultant network elements can be marked for skipping the expansion.

A simulation is executed over such cases to check once actions can be taken; how much capacity gain can be achieved. This is done by identifying set of cells/sectors/sites which has proposed configurations and have similar clutter, demography to identified quality offender cells/sectors/sites. Using correlation, the expected gain is evaluated and weighted gain is considered as an outcome of proposals. If it is observed that no visible capacity improvement can be achieved, then only expansion is proposed, so that the network can be optimally utilized.

In step 306, the capacity bottleneck decision module 120 determines whether quality constraints have been identified. If the quality constraints have been identified, in step 308, the capacity bottleneck decision module 120 performs quality optimization and capacity simulation to check if a desired capacity gain has been met. In step 310, the capacity bottleneck decision module 120 determines if the desired capacity gain has been met or not. If the desired capacity gain has not been met, the capacity assessment is performed again.

If the desired capacity gain has been met, in step 312, it is determined that the capital expenditure is not required and the loop ends. If the quality constraints have not been identified, in step 314, the capacity bottleneck decision module 120 performs service experience assessment for the identified capacity saturated network elements. A seamless comparison of capacity saturation and quality assessment can be further extended on service experience by checking how the capacity saturated elements perform in terms of service.

For example, consider the DI cell throughput or accessibility, wherein quality and capacity bottlenecks are breached or about to breach. Service experience is translated into service experience KQI, which generalizes the service experience representation. By comparing the service KPI with threshold value, a network element can be marked based on whether served service experience is Threshold nonaligned, or aligned. Similar to the bucketized method, each network element can be assigned with Threshold nonaligned or aligned service experience, based on occurrence; which can be combined with capacity assessment to check whether services are getting impacted with saturation and false triggers can be avoided. For example, out of 243 combinations of capacity KPIs, if capacity assessment suggests a bottleneck, while quality assessment indicates good quality, then based on service experience, the capacity assessment decision can be revised.

In step 316, the capacity bottleneck decision module 120 performs capacity optimization scope check for capacity gain and simulation. Network elements marked as capacity saturated are assessed in terms of capacity optimization. Capacity optimization involves forming a decision tree. The capacity bottleneck decision module 120 assesses the plurality of network elements marked as capacity saturated in terms of capacity optimization by forming the decision tree. The formation of the decision tree comprises performing initiation by comparing the carried payload and utilization on co-located cells and RAT technologies. This step can be extended on significant first tier neighbours and if there is a margin for traffic offloading without impacting customer experience, then offloading is deduced with source and top target definitions and some nominals. A simulation matrix can be used to simulate how the offload can result in improved capacity. Other action items include license and service state augmentation of capacity related features; for example, carrier aggregation, configuration parameter tuning, handover tuning, for example, ping-pong avoidance, reducing overload, device type distribution and spectrum migration, and the like. The network elements, which have been underutilized in the historical data, can be assessed in terms of downgrading its HW or licenses which could be transferred to high consumption areas.

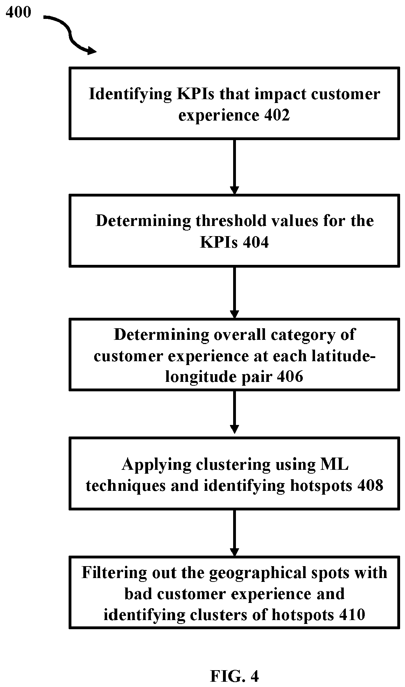

In step 318, the capacity bottleneck decision module 120 checks whether the desired capacity gain has been met or not. If the desired capacity gain has been met, then the loop ends and it is determined that the capital expenditure is not required. If the desired capacity gain has not been met, in step 320, a quality of experience (QoE) assessment is performed in the identified capacity saturated network elements coverage area for identifying hotspot(s). The capacity bottleneck decision module 120 assesses the quality of experience (QoE) by using a clustering technique illustrated by FIG. 4. Customer experience data which could be sourced from Deep Packet Inspection (DPI), cell, or user traces, or any other probe can be considered to form cell level QoE from QoE of individual subscribers. The QoE can be broken based on service levels; for example, video streaming or web and the like, to have more granular analysis. QoE derivation can vary as per the use case and requirement.

For example, if QoE related to video services is considered then QoE can be a function of number of stalls, buffering time, buffering frequency; while in web service page load time, delay can be a major factor. Geo located QoE which can be attributed on QCI (quality of service class indicator) level; for example, the QoE of all services for a subscriber which are carried as per QCI could be defined as function of perceived user throughput, RSRP/SINR/RSRQ, latency.

$$QoEvideo = f(stalls, buffer\ time,\ buffer\ frequency..)$$

$$QoEweb = f(page\ load\ time, delay..)$$

$$QoEgeo = f(user\ throughput,\ RSRP/SINR/CQI/latency..)$$

Derived QoE can be generalized on the scale of 0-10, which indicates how good is the quality of experience. This generalized QoE can be utilized to prioritize the capacity saturated network elements, based on the severity of the poor quality of experience. For geo QoE derivation, individual attributes, for example, RSRP or user throughput can be compared to pre-defined thresholds or reference values and then can be generalized based on their distribution. For example, RSRP<-100 dbm indicates that either the user location is close to the cell edge or the served RF is not sufficiently good to enable better feedback for CQI; hence resulting in lower MCS and poor user throughput. Based on the distribution of samples which are less than 100 dBm, mapping as per table 1 can be done to have a generalized QoE. This can be applied on the user and the network element level. Generalization method can be based on multiple networks and number of iterations. Thresholds and mapping can be flexible to be accommodated, as per the geographical and demographical variation.

| RF Score | % of samples>-100 dBm | Status |
|---|---|---|
| 10 | =100 | Excellent |
| 9 | 99-100 | Excellent |
| 8 | >=98 | Excellent |
| 7 | <98 | Good |
| 6 | >=95 | Good |
| 5 | <95 | Acceptable |
| 4 | >=90 | Acceptable |
| 3 | <90 | Poor |
| 2 | >=30 | Poor |
| 1 | <30 | Critical |
| 0 | >=0 | Critical |
| Table 1 | | |

Similar methods can be extended on threshold basis on the number of metrices, which indicate user experience.

Each metric can be derived in terms of the generalized approach and then the final QoE can be generated using the equation:

$$Network\ customer\ score = 10 \times \big(C1 \times (User\ perceived\ througput) + C2 \times (RF\ health\ indicators) + C3 \times (Service\ specific\ attributes)\big)$$

In step 322, the capacity bottleneck decision module 120 considers the business metrics for the identified hotspot and the network elements for capital expenditure prioritization. The capacity bottleneck decision module 120 prioritizes the plurality of network elements and locations based on indexing, for generation of KQIs and for generating a single score to rank bottleneck issues. In step 324, the recommendation module 124 recommends capacity investment planning and simulating capacity gain based on the assessed at least one business metric and based on the single score and proposes a plan for capacity investment based on capacity gain simulation.

The various actions in method 300 may be performed in the order presented, in a different order or simultaneously. Further, in some embodiments, some actions listed in FIG. 3 may be omitted.

To address the major capital expenditure pain point areas, where poor QoE is perceived due to capacity constraints, geo located QOE information can be utilized to identify hotspots via a clustering mechanism. Factors such as DL user throughput, RSRP, SINR, carried traffic can be used to provide insights related to user experience. Further these hotspots can be corelated with cells identified for capacity bottlenecks using Cell IDs (available in the geo location data (Trace/DPI etc.)). This can be used to identify, where the major capacity issue exists. Based on type and quantity of hotspots the, type of investment decision can be derived. Embodiments herein disclose a methodology to identify centroid of hotspot(s), which can pinpoint the exact capacity expansion location.

FIG. 4 illustrates clustering process flow, according to the embodiments herein. The capacity bottleneck decision module 120 comprises a clustering module for assessing the QoE. In step 402, the clustering module identifies KPIs impacting customer experience. As per QoE methodology, the first set of constituting KPIs, which impact the customer experience, are identified. The clustering module uses statistical modelling with domain expertise to determine threshold values for KPIs.

Let KPIm be a KPI from a set of KPIs, which can impact customer experience.
KPIm $\in$ S where S = {KPI1, KPI2, KPI3, ....... KPIn}.

The threshold for KPIm is identified as below:

KPIm > x2 for good customer experience
x1 < KPIm <= x2 for average customer experience
KPIm <= x1 for bad customer experience
where x1, x2 $\in$ Z , Z is a set of integers.

Table 2

| lat-lon | KPI overall category |
|---|---|
| (lat1, lon1) | Good |
| (lat2, lon2) | Average |
| (lat3, lon3) | Bad |
| (latn, lonn) | Bad |

In step 404, the clustering module determines threshold values for the KPIs. In step 406, the clustering module determines the overall category of customer experience at each geo-coordinate (which can be in terms of latitude & longitude).

Embodiments herein utilize statistical methods to identify the overall category of customer experience for each geographic coordinate with respect to the thresholds set for KPIm.

In step 408, the clustering module identifies hotspots by applying clustering using ML. In step 410, the clustering module filters out the coordinates with good customer experience and uses machine learning clustering techniques to identify the clusters of hotspots with bad customer experience.

Embodiments herein use a clustering method which works better for spatial coordinates data; for example, DBScan.

Table 3

| lat-lon | Cluster_number |
|---|---|
| (lat1, lon1) | C1 |
| (lat2, lon2) | C2 |
| (lat3, lon3) | C1 |
| (lat4, lon4) | C2 |
| (latn, lonn) | C1 |

The various actions in method 400 may be performed in the order presented, in a different order or simultaneously. Further, in some embodiments, some actions listed in FIG. 4 may be omitted.

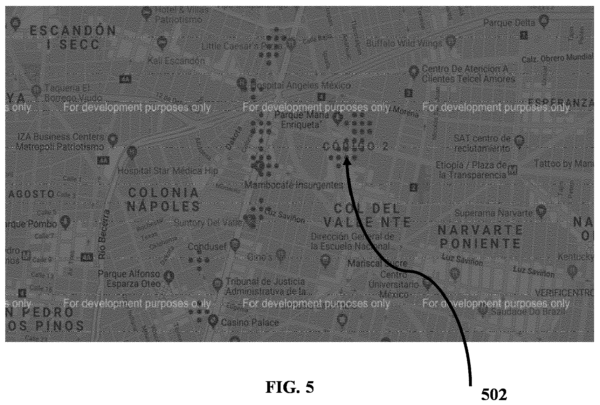

FIG. 5 illustrates a visualization of the clustering output on map, according to the embodiments herein. The dots in the figure 502 indicate the geographic coordinates with bad customer experience. Let Ci be a cluster from the set of clusters C generated from clustering output, where $Ci \in C$ where C = {C1, C2, C3, ....... Cn}.

The coordinates of the centroid of cluster Ci is:

$$(xc, yc) = \begin{bmatrix} \dfrac{k}{\underset{i=1}{\overset{1}{k\Sigma lati}}} & \dfrac{k}{\underset{i=1}{\overset{1}{k\Sigma lonj}}} \end{bmatrix}$$

where (xc, yc) are the x and y coordinates of the centroid of cluster Ci and lat and lon are the coordinates of the geographic latitude and longitude under cluster Ci.

The hotspots and centroids identified from clustering can be used for capacity expansion decision. Based on the type, distribution, and size of hotspots, the type of investment can be decided in terms of small cells/macro or inbuilding solution or in terms of new carrier deployment.

For example, in one scenario, if there are only few hotspots in the serving cell, which also has capacity constraints from the capacity assessment step (as disclosed herein), then a small cell can be selected for centroid locations. If the serving cell has hotspots distributed across the whole serving cell footprint, then a carrier addition may help to add capacity, depending on if addition can be done; else a macro site can be selected.

Further, cost modelling can be applied to choose the best cost-effective plan by comparing the investment cost of various available options. For example, based on input baseline cost, the cost of adding large numbers of small cells can be compared with addition of a carrier or a macro cell and so on. Another dimension of capital expenditure investment is business aspect. All investments may not return the same ROI. Prioritizing the capital expenditure, where it is required most can generate better ROI. Business factors such as revenue, attrition or churn, high value subscribers, social importance; for example, location covering airport, mall or any other important location which helps in generating perception, thus converting high ROI, can be considered while looking into capital expenditure. Each network element can be attributed on a scale of 0-10 based on considered attributes and using the equation:

$$Network\ business\ score = 10 \times$$

$$\left(B1 \times (Revenue) + B2 \times (Churn) + B3 \times (High\ value\ users)\right)$$

Individual attribute can be normalized and mapped (similar to table 1, as per the use case) and a single business score can be generated using weight factors.

Considering all factors (i.e., capacity assessment, quality and service assessment), customer experience, business factors, pool of network elements and locations can be prioritized, which fall under capacity saturation category. To achieve this, embodiments herein disclose an indexing methodology, so that priority can be assigned where it is required most; for example, a case which has high business influence (in terms of revenue generation, attrition or churn, high value subscribers, but suffering from poor customer experience and capacity bottlenecks) should be prioritized, than a case which may have an even higher capacity bottleneck, but low business influence. For combining multi facet aspects, a weight methodology is disclosed where normalization and AHP (analytical hierarchical process) is employed for creating KQIs. Indexing can generate a single score, which can be used for ranking the bottleneck issues. As different KPIs could have different scale and ranges; for example, throughput can have value from 1-100(Mbps), while PRB Utilization does have a range in percentage 1-100 %. Similarly, traffic could be any numeric value.

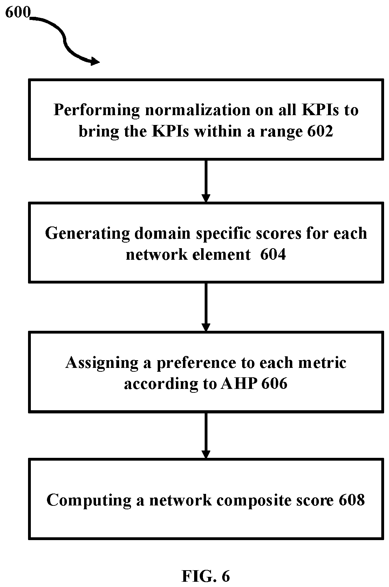

FIG. 6 illustrates the method involved in the generation of effective KQIs, according to embodiments herein. The capacity bottleneck decision module 120 prioritizes the plurality of network elements and locations based on indexing, for the generation of the effective KQIs and for generating a single score. By using the indexing methodology, priority could be assigned where it is required the most. For example, a case which has high business influence in terms of revenue generation, attrition or churn, high value subscribers & have poor customer experience having capacity bottlenecks should be prioritized first than a case which may have even higher capacity bottleneck but low business influence. The single score which is generated by the indexing methodology is used for ranking the bottleneck issues. The capacity bottleneck decision module 120 comprises a normalization module. In step 602, the normalization module performs normalization on all KPIs to bring the KPIs within the range, given by $0 \leq K(i) \leq 1$, where $K(i)$ represents the KPIs. Different KPIs have different scale and ranges. For e.g., throughput can have value from 1-100(Mbps) while PRB Utilization can have a range in percentage 1-100 %. Similarly, traffic could be any numeric value . To use a common methodology, it is required to bring the plurality of KPIs on same scale without losing their characteristics, and therefore normalization is performed on all KPIs to bring them $0 \leq K(i) \leq 1$ range , where $K(i)$ represent KPIs.

Consider a network with m cells and n KPI attributes, the ith alternative can be translated into its equivalent comparability sequence xi = (xi1, xi2, ..., xij, ..., xin) using one of the following equations where i = 1, 2, ..., m and j = 1, 2, ..., n.

$$x_{ij} = \left( \frac{\{y_{ij}\} - Min\{y_{ij}\}}{Max\{y_{ij}\} - Min\{y_{ij}\}} \right) \tag{1}$$

$$x_{ij} = \left( 1 - \frac{Max\{y_{ij}\} - \{y_{ij}\}}{Max\{y_{ij}\} - Min\{y_{ij}\}} \right) \tag{2}$$

$$x_{ij} = \left( 1 - \frac{\left| \{y_{ij}\} - \{y^*_{ij}\} \right|}{Max(Max\{y_{ij}\} - \{y^*_{ij}\}, \{y^*_{ij}\} - Min\{y_{ij}\})} \right) \tag{3}$$

where yij is the value of alternative i's attribute j value, y*j refers to the closer to the desired value.

Equation 1 is used on the larger and better attributes; equation 2 is used on the smaller and better attributes and equation 3 is used on the nominal attributes. In step 604, after the normalization process, a score generation module of the capacity bottleneck decision module 120 generates domain specific scores for each network element as below to have an assessment score; for example, the domain specific scores comprises network capacity score, network quality score, a network service score, a network business score, and a network customer score (QoE) which can be combined to have a single score. The specific scores that are given below are effective KQIs which is based on multiple KQIs. For example, the network capacity score is an effective KQI based on other KQIs such as traffic metrices, users metrices, and resource utilization metrices.

$$Network\ capacity\ score = 10 \times (W1 \times (Traffic\ metrices) + W2 \times (Users\ metrices) + Wa \times (Resource\ utilization\ metrices)) \tag{4}$$

$$Network\ business\ score = 10 \times \big(B1 \times (Revenue) + B2 \times (Churn) + B3 \times (High\ value\ users)\big) \tag{5}$$

$$Network\ customer\ score = 10\ \times \bigl(C1\times$$
$$(User\ perceived\ throughput) + C2\ \times (RF\ health\ indicators) + C3\times$$
$$(Service\ specific\ attributes)\bigr) \qquad\qquad (6)$$

$$Network\ quality\ score = 10\ \times \bigl(P1\times (Radio\ attributes) + P2\ \times$$
$$(MCS\ attributes) + P3\times (TA\ attributes)\bigr) \qquad\qquad (7)$$

$$Network\ service\ score = 10\ \times \bigl(S1\times (Throughput) + S2\ \times$$
$$(Any\ other\ service\ metric)\bigr) \qquad\qquad (8)$$

Based on a use case requirement, the network capacity score can ingest different traffic (which are not limited to, for example VoLTE, Data, Voice etc.), along with avg RRC connected users. Available resources can cater PRB utilization, PDCCH utilization, and so on. Similarly, Network Business score can consider Revenue, Churn, High value users, and so on.

Customer score (i.e., QoE) can vary based on the method used. For example, user perceived throughput, perceived RF health (i.e., RSRP, SINR, RSRQ, and so on), service specific attributes (for example, page load time, latency, stall count, stall time, buffering frequency) and so on could be considered. Quality metrices (such as CQI, MCS, Aggregation, TA, and the like), can be fed, while, for service metrices, cell throughput, accessibility, retainability etc. can be considered. W(i), B(i), C(i), P(i), S(i) where i=1, 2 ... m are weight assigned to each type of metric, which also signifies the importance of each KPI metric. To have logical process for weight assignment, embodiments herein disclose a multi-criteria decision-making approach, such as Analytical hierarchical process (AHP). The capacity bottleneck decision module 120 generates an assessment score by combining the generated domain specific score. In step 606, under AHP each metric can be assigned a preference from 1-9 scale which can be listed as in Table 4. The capacity bottleneck decision module 120 assigns a value to each of the plurality of KPIs to indicate the preference for one or more of the generated domain specific scores, as shown in Table 4. The capacity bottleneck decision module 120 determines a matrix based on Analytical Hierarchical Process (AHP) for calculating a weight corresponding to each of the KPIs.

Table 4

| Scale | Preferences |
|---|---|
| 9 | Extremely preferred |
| 8 | Very strongly to extremely |
| 7 | Very strongly preferred |
| 6 | Strongly to very strongly |
| 5 | Strongly preferred |
| 4 | Moderately to strongly |
| 3 | Moderately preferred |
| 2 | Equally to moderately |
| 1 | Equally preferred |

As per considered metrices, preference can be marked against each metric under similar domain, i.e., network capacity metrices/business or customer experience. For example, if the network capacity is considered, then the AHP matrix can be used for weight calculation. The matrix formation has the flexibility to define the preference as per the use case.

Table 5

| Network Capacity | PRB Utilization | DL Traffic | RRC Connected Users | PDCCH Utilization |
|---|---|---|---|---|
| PRB Utilization | 1 | 3 | 5 | 5 |
| DL Traffic | 1/3 | 1 | 5 | 5 |
| RRC Connected Users | 1/5 | 1/5 | 1 | 3 |
| PDCCH Utilization | 1/5 | 1/5 | 1/3 | 1 |

To get the weights corresponding to each KPI, the geometric mean method can be utilized as below:

$$W_i = \left(\prod_{j=1}^{n} a_{ij}\right)^{(1/n)} \Big/ \sum_{i=1}^{n}\left(\prod_{j=1}^{n} a_{ij}\right)^{(1/n)}$$

Where aij represents the priority matrix element; for example the priority matrix formed from table 4 can have values, a11=1, a12=3, and so on.

Apart from the geometric mean method, eigenvector methodology can also be used for weights and weight evaluation can be done using consistency index and consistency ratio. A similar approach can be extended to different domains for their respective weights as well. In step 608, a network composite is computed by combining the capacity, customer experience, and business scores as per below:

$$\text{Network Composite score} = \sum W(i)*S(i) \quad \text{where } i=1,2,3$$

where i=1,2,3 Where W(i) is the assigned weight to each KQI (capacity, customer experience, business scores), while S(i) is the respective score.

The capacity bottleneck decision module 120 computes a network composite score based on the calculated weight and the respective domain specific score. The determined network composite score is used for ranking and prioritization of investment cases. The capacity bottleneck decision module 120 prioritizes cases of investment based on the computed network composite score, the cases of investment being the output of the bucketization and a machine learning feedback loop.

According to the embodiments herein, simulation methodology can be used to indicate what the capacity expansion should be for certain improvements in QOE. Simulations can also help to cater to latent demand and other latent actions (for example, planned neighbors),which can be encountered in the near future, thus forecasting and capacity expansion decisions should be adjusted accordingly. For example, if the network service provider expects a traffic gain by 15% in some regions by running market campaigns, then the forecasting base model adjusts the forecasting by assuming mentioned growth in traffic and adjusts the forecasted data. Subsequent rule models can consider new updated traffic demands for a plurality of categories. Similarly, if few neighbor cells are planned in the near future, then based on planned configurations (Base station transmission power, control channel overhead, antenna height, bandwidth, frequency, expected cell edge throughput etc.) of upcoming cells, neighbor cell radius and footprint can be determined.

K-means clustering can be employed to existing cells/sites, so that cell/sites can be grouped in clusters with similar characteristics and new neighbor cells/sites are assigned a group, which is highly correlated on factors like similar configurations etc. As footprint (RSRP/SINR/RSRQ) of existing cells are known and their geo spatial traffic profile is also available, expected behavior of neighbor cells can be estimated in terms of carried expected traffic per timing advance bin. Existing cell footprint and expected neighbor cell footprint could provide an overview on where existing cells can be dominant and can act as serving cells and where neighbor cells can become dominant and offload existing cells. This can help in identifying the expected offload amount. This offload offset can further be adjusted in forecasted traffic demand and in other capacity metrices. Thus, the rule model can consider new values, which have considered upcoming neighbor cell impact as well.

The various actions in method 600 may be performed in the order presented, in a different order or simultaneously. Further, in some embodiments, some actions listed in FIG. 6 may be omitted.

The embodiments disclosed herein can be implemented through at least one software program running on at least one hardware device and performing network management functions to control the network elements. The network elements shown in FIG. 1 include blocks which can be at least one of a hardware device, or a combination of hardware device and software module.

The embodiments disclosed herein describes a predictive capacity analysis and pro-active performance bottleneck identification using multivariate machine learning techniques for efficient network capacity expansion and optimization to enhance customer experience by improving quality of service (QoS) while ensuring better return of investment (ROI). Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in at least one embodiment through or together with a software program written in for example, Very high speed integrated circuit Hardware Description Language (VHDL) another programming language, or implemented by one or more VHDL or several software modules being executed on at least one hardware device. The hardware device can be any kind of portable device that can be programmed. The device may also include means which could be for example, hardware means like for example, an ASIC, or a combination of hardware and software means, for example, an ASIC and an FPGA, or at least one microprocessor and at least one memory with software modules located therein. The method embodiments described herein could be implemented partly in hardware and partly in software. Alternatively, the invention may be implemented on different hardware devices, for example, using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of embodiments and examples, those skilled in the art will recognize that the embodiments and examples disclosed herein can be practiced with modification within the spirit and scope of the embodiments as described herein.

## Claims

1. A method for assessing a plurality of network elements in a network, the method performed by a capacity bottleneck decision module (120) of a computing device (102), the method comprising:

    performing bucketization by categorizing each of a plurality of KPIs into a plurality of buckets;
    assessing a capacity for the plurality of network elements (126-1, 126-2, ..., 129-N) at different granularity of one of a cell, a sector, and a site, for identifying capacity saturated network elements;
    assessing quality for the identified capacity saturated network elements;
    identifying one or more quality constraints based on the assessed quality;
    optimizing quality and simulating capacity to check if a desired capacity gain has been met;
    assessing service experience for the identified capacity saturated network elements, if the one or more quality constraints have not been identified and if the capacity gain has been met;
    assessing quality of Experience (QoE) in the identified capacity saturated network elements coverage area for identifying one or more hotspots;
    assessing at least one business metric for the identified one or more hotspots and the plurality of network elements;
    prioritizing the plurality of network elements and locations based on indexing, for generation of KQIs and for generating a single score to rank bottleneck issues; and

    recommending capacity investment planning and simulating capacity gain based on the assessed at least one business metric and based on the single score.

2. The method as claimed in claim 1, wherein performing the bucketization is based on one or more of historical data, forecasted data, pre-defined thresholds based on 3GPP industry standards, and nature of the plurality of KPIs.

3. The method, as claimed in claim 1, wherein performing the bucketization comprises assigning an absolute category for a combination of each of the plurality of KPIs and each of the plurality of network elements, based on the highest bucket, historical data, and forecasted data.

4. The method as claimed in claim 1, wherein the plurality of KPIs is categorized into capacity metrices, quality metrices, customer experience metrices, service experience metrices, and business metrices.

5. The method as claimed in claim 1, wherein prioritizing the plurality of network elements and locations based on indexing, for the generation of the KQIs and for generating the single score comprises:

> performing normalization on the plurality of Key Performance Indicators (KPIs);
> generating domain specific scores for each of the plurality of network elements, wherein the domain specific scores comprise a network capacity score, a network business score, a network customer score, a network quality score, and a network service score;
> generating an assessment score by combining the generated domain specific scores;
> assigning a value to each of the plurality of KPIs to indicate a preference for one or more of the generated domain specific scores;
> determining a matrix based on Analytical Hierarchical Process (AHP) for calculating a weight corresponding to each of the KPIs;
> computing a network composite score based on the calculated weight and the respective domain specific score; and
> prioritizing cases of investment based on the computed network composite score, wherein the cases of investment are output of the bucketization and a Machine Learning (ML) feedback loop.

6. The method as claimed in claim 1, wherein the plurality of KPIs are obtained by processing multi-dimensional data using a big data platform.

7. The method as claimed in claim 1, wherein assessing the capacity comprises:

> assigning each network element with a category of KPI from the set of KPIs based on granularity;
> assigning an absolute score with respect to historical and forecasted data for each KPI and network element combination, based on the highest bucket of category occurrence; and
> deriving a final category assignment by comparing results of bucket category output of the historical and forecasted data.

8. The method as claimed in claim 1, wherein, on assessing service experience for the identified capacity saturated network elements, the method comprises assessing the plurality of network elements marked as capacity saturated in terms of capacity optimization by forming a decision tree, wherein the formation of the decision tree comprises performing initiation by comparing a carried payload and utilization on co-located cells and Radio Access technology (RAT).

9. The method as claimed in claim 1, wherein assessing quality of Experience (QoE) comprises:

> identifying (402) the plurality of KPIs impacting customer experience;
> determining (404) threshold values for the plurality of KPIs;
> determining (406) an overall category of customer experience at each geo-coordinate of a location;
> identifying (408) a plurality of hotspots by applying clustering; and
> filtering out (410) one or more co-ordinates with good customer experience and identifying the plurality of hotspots with poor customer experience.

10. A system for assessing a plurality of network elements in a network, wherein the system comprises:

> a plurality of network elements (126-1, 126-2, ..., 129-N);
> a computing device (102) coupled to the plurality of network elements (126-1, 126-2, ..., 129-N) and comprising a plurality of modules, wherein the system is configured for:

>> performing bucketization by categorizing each of a plurality of KPIs into a plurality of buckets;
>> assessing a capacity for the plurality of network elements (126-1, 126-2, ..., 129-N) at different granularity of one of a cell, a sector, and a site, for identifying capacity saturated network elements;
>> assessing quality for the identified capacity saturated network elements;
>> identifying one or more quality constraints based on the assessed quality;
>> optimizing quality and simulating capacity to check if a desired capacity gain has been met;
>> assessing service experience for the identified capacity saturated network elements, if the one or more quality constraints have not been identified and if the capacity gain has been met;
>> assessing quality of Experience (QoE) in the identified capacity saturated network elements coverage area for identifying one or more hotspots;

assessing at least one business metric for the identified one or more hotspots and the plurality of network elements;

prioritizing the plurality of network elements and locations based on indexing, for generation of KQIs and for generating a single score to rank bottleneck issues; and

recommending capacity investment planning and simulating capacity gain based on the assessed at least one business metric and based on the single score.

11. The system as claimed in claim 10, wherein, performing the bucketization is based on one or more of historical data, forecasted data, pre-defined thresholds based on 3GPP industry standards, and nature of the plurality of KPIs.

12. The system, as claimed in claim 10, wherein the system is configured for performing the bucketization by:

assigning an absolute category for a combination of each of the plurality of KPIs and each of the plurality of network elements, based on the highest bucket, historical data, and forecasted data; and

deriving a final category assignment by comparing results of bucket category output of the historical and forecasted data.

13. The system as claimed in claim 10, wherein the plurality of KPIs is categorized into capacity metrices, quality metrices, customer experience metrices, service experience metrices, and business metrices.

14. The system as claimed in claim 10, wherein the system is configured for prioritizing the plurality of network elements and locations based on indexing, for the generation of the KQIs and for generating the single score by:

performing normalization on the plurality of Key Performance Indicators (KPIs);

generating domain specific scores for each of the plurality of network elements, wherein the domain specific scores comprise a network capacity score, a network business score, a network customer score, a network quality score, and a network service score;

generating an assessment score by combining the generated domain specific scores;

assigning a value to each of the plurality of KPIs to indicate a preference for one or more of the generated domain specific scores;

determining a matrix based on Analytical Hierarchical Process (AHP) for calculating a weight corresponding to each of the KPIs;

computing a network composite score based on the calculated weight and the respective domain specific score; and

prioritizing cases of investment based on the computed network composite score, wherein the cases of investment are output of the bucketization and a Machine Learning (ML) feedback loop.

15. The system as claimed in claim 10, wherein the plurality of KPIs are obtained by processing multi-dimensional data using a big data platform.

16. The system as claimed in claim 10, wherein the system is configured for assessing the capacity by:

assigning each network element with a category of KPI from the set of KPIs based on granularity; and

assigning an absolute score with respect to historical and forecasted data for each KPI and network element combination and based on the highest bucket of category occurrence.

17. The system as claimed in claim 10, wherein, on assessing service experience for the identified capacity saturated network elements, the system is configured for assessing the plurality of network elements marked as capacity saturated in terms of capacity optimization by forming a decision tree, wherein the formation of the decision tree comprises performing initiation by comparing a carried payload and utilization on co-located cells and Radio Access technology (RAT).

18. The system as claimed in claim 10, wherein the system is configured for assessing quality of Experience (QoE) by:

identifying (402) the plurality of KPIs impacting customer experience;

determining (404) threshold values for the plurality of KPIs;

determining (406) an overall category of customer experience at each geo-coordinate of a location;

identifying (408) a plurality of hotspots by applying clustering; and
filtering out (410) one or more co-ordinates with good customer experience and identifying the plurality of hotspots with poor customer experience.

**FIG. 1**

200

Identifying a preferred set of KPIs for capacity estimation for forecasting 202

↓

Performing EDA on the time series data for the KPIs 204

↓

Selecting a base model with least loss function from the candidate set of models for forecasting 206

↓

Optimizing model for forecasting 208

↓

Categorizing the KPIs 210

↓

Feeding historical time series data into ML model 210

FIG. 2

EP 4 075 752 A1

300

No

Capacity
assessment
302

Quality
assessment
304

Quality
constraints
identified?
306

Yes

Quality
optimization &
capacity
simulation 308

Desired
capacity
gain
met?
310

Yes

Service experience
assessment 314

Capacity
optimization scope
check 316

Capacity gain
met. End of
loop 312

Yes

Capacity
investment
proposal and
capacity gain
simulation 324

Business
metrics
inclusion 322

QoE
assessment 320

No

Desired
capacity
gain
met?
318

FIG. 3

400

Identifying KPIs that impact customer
experience 402

Determining threshold values for the
KPIs 404

Determining overall category of
customer experience at each latitude-
longitude pair 406

Applying clustering using ML
techniques and identifying hotspots 408

Filtering out the geographical spots with
bad customer experience and
identifying clusters of hotspots 410

FIG. 4

502

FIG. 5

600

Performing normalization on all KPIs to
bring the KPIs within a range 602

Generating domain specific scores for each
network element  604

Assigning a preference to each metric
according to AHP 606

Computing a network composite score 608

FIG. 6

Europäisches
Patentamt

European
Patent Office

Office européen
des brevets

# EUROPEAN SEARCH REPORT

Application Number

EP 21 20 7868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/014698 A1 (MEIER-HELLSTERN KATHLEEN [US] ET AL) 14 January 2021 (2021-01-14) * the whole document * | 1-18 | INV. H04L41/0823 H04L41/0896 H04L41/14 H04L41/147 |
| A | EP 3 382 938 A1 (TELEFONICA DIGITAL ESPANA SLU [ES]) 3 October 2018 (2018-10-03) * the whole document * | 1,18 | H04L41/16 |

TECHNICAL FIELDS
SEARCHED      (IPC)

H04L

The present search report has been drawn up for all claims

| Place of search | Date of completion of the search | Examiner |
|---|---|---|
| Munich | 7 April 2022 | García Bolós, Ruth |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 20 7868

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2022

| Patent document cited in search report | Publication date | Patent family member(s) | Publication date |
|---|---|---|---|
| US 2021014698 A1 | 14-01-2021 | NONE | |
| EP 3382938 A1 | 03-10-2018 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202141017064